# EUROPÄISCHE PATENTSCHRIFT

(11) **EP 0 942 794 B1**
(45) Veröffentlichungstag und Bekanntmachung des Hinweises auf die Patenterteilung: **22.05.2002**
(21) Anmeldenummer: 97938738.8
(22) Anmeldetag: 18.09.1997
(51) Int. Cl.: B21D 26/02, B21C 37/08, B62D 25/00

(54) **VERFAHREN ZUR HERSTELLUNG EINES FORMTEILES**
METHOD FOR PRODUCING A MOLDED PART
PROCEDE POUR LA FABRICATION D'UNE PIECE MOULEE

(30) Priorität: 03.12.1996 CH 296296
(43) Veröffentlichungstag der Anmeldung: 22.09.1999
(73) Patentinhaber: ELPATRONIC AG, 8962 Bergdietikon (CH)
(72) Erfinder: MEIER, Markus, CH-8400 Winterthur (CH); URECH, Werner, CH-5466 Kaiserstuhl (CH)
(86) Internationale Anmeldenummer: CH9700351
(87) Internationale Veröffentlichungsnummer: WO9824569

(56) Entgegenhaltungen:
- EP-A- 0 589 370
- DE-A- 3 418 691
- DE-C- 900 085
- US-A- 4 732 819
- US-A- 5 070 717

## Beschreibung

Die Erfindung betrifft ein Verfahren zur Herstellung eines durch Innenhochdruckumformung verformten Formteiles aus Metallblech.

Es ist bekannt, Formteile durch Innenhochdruckumformung von rohrförmigen, stumpfgeschweissten Rohlingen zu bilden, die von entsprechendem Stangenmaterial auf die notwendige Länge zugeschnitten werden. Aus EP-A-0 620 056 ist es weiter bekannt, mehrere solche stumpfnahtgeschweisste, rohrförmige Rohlinge verschiedenen Durchmessers und verschiedener Dicke zu einem einzigen Rohr zu verschweissen, welches dann durch Innenhochdruckumformung zu einem rohrförmigen Formteil umgeformt wird.

Langgestreckte, aus rohrförmigen Rohlingen entstandene Formteile können insbesondere als Bauteile im Automobilbau eingesetzt werden. In der Regel müssen dort diese Bauteile mit anderen Teilen verbunden werden, z.B. durch erneute Schweissung oder durch Kleben. Für bestimmte Aufgaben ist es dazu notwendig, dass ein Bauteil mit mindestens einem Befestigungsflansch versehen ist. Bei den genannten Bauteilen muss ein solcher Flansch in mindestens einem Arbeitsgang hinzugefügt werden, was vom Aufwand her nicht vorteilhaft ist, so dass in diesem Falle in der Regel auf konventionelle Weise mehrere durch Tiefziehen oder Pressen umgeformte Teile zu einem Formteil zusammengeschweisst werden.

Aus EP-A-0 589 370 ist es bekannt, zwei im wesentlichen ebene Bleche mit einem Kanal zur Einbringung des Fluids für die Innenhochdruckverformung zu versehen und die Bleche randseitig zu verschweissen; es entsteht ein Formkörper mit einem umlaufenden Flansch, was für viele Anwendungen im Automobilbau nicht erwünscht ist. DE-C 900 085 zeigt ebenfalls das Innenhochdruckverformen von zwei im wesentlichen ebenen, miteinander verschweissten Blechen, die in der Mitte eine aus zwei Wölbungen gebildete Kammer zur Einbringung des Fluids aufweisen. Auch dabei wird ein Formkörper mit umlaufendem Flansch erzeugt. DE-A 34 18 691 zeigt ebenfalls das Verformen von zwei oder vier ebenen Blechen, die randseitig miteinander verbunden sind. US-A 5 070 717 zeigt die Verformung eines stumpfgeschweissten Rohres ohne Flansch derart, dass bei der Verformung ein-Flansch erzeugt wird. Auf diese Weise ist es möglich, einen langgestreckten Formkörper mit einem nur einseitigen Flansch zu erzeugen, wobei zur Erzielung einer Flanschform mit gerader Stirnseite noch ein Schneidvorgang und ein Schweissvorgang erfolgen muss.

Es ist daher Aufgabe der Erfindung, ein Verfahren zu schaffen, welches durch Innenhochdruckumformung ein Bauteil schafft, welches auf einfache Weise herstellbar und mit anderen Teilen verbindbar ist, insbesondere ein langgestrecktes Bauteil mit einem Flansch auf nur einer Seite des Bauteiles oder mit zwei Flanschen auf einander gegenüberliegenden Seiten des Bauteiles.

Diese Aufgabe wird durch die Merkmale des Anspruchs 1 gelöst.

Dadurch, dass zunächst ein durch Runden ein rohrförmiger Körper mit einem nach aussen weisenden Flansch gebildet wird, ergibt sich eine einfache Herstellung, da der Flansch als Schweissflansch dient, der mit herkömmlichen, kostengünstigen Schweissverfahren in hoher Kadenz verschweisst werden kann. Beim fertigen Formteil dient dieser vorhandene Flansch als Befestigungsort für andere Teile, was den Einsatz eines solchen Formteiles bei vielen Anwendungen gegenüber herkömmlichen innenhochdruckverformten Formkörpern vorteilhaft macht.

In einer alternativen Lösung gemäss Anspruch 1 werden zunächst zwei jeweils halbgerundete und mit zwei abstehenden ebenen Zungen versehene Bleche zu einem im wesentlichen rohrförmigen Körper mit zwei Flanschen verbunden.

Im folgenden werden Ausführungsbeispiele der Erfindung anhand der Zeichnungen näher erläutert. Dabei zeigen
Figuren 1 a - 1 e schematisch die Herstellungsschritte eines gemäss der Erfindung hergestellten Formteiles;
Figur 2 ein gemäss der Erfindung hergestellten Formteil in Seitenansicht und seine Anwendung als Dachkantenprofil eines Automobils;
Figur 3 ein gemäss der Erfindung hergestellten Formteil in Seitenansicht und seine Anwendung als Schwellenprofil eines Automobils;
Figur 4 ein gemäss der Erfindung hergestellten Formteil in Seitenansicht und seine Anwendung als Türpfosten eines Automobils;
Figur 5 ein gemäss der Erfindung hergestellten Formteil in Seitenansicht und seine Anwendung als Scharnier- oder Schlossträger eines Automobils; und
Figur 6 eine weitere Ausführungsform des gemäss der Erfindung hergestellten Formteils vor der Innenhochdruckumformung.

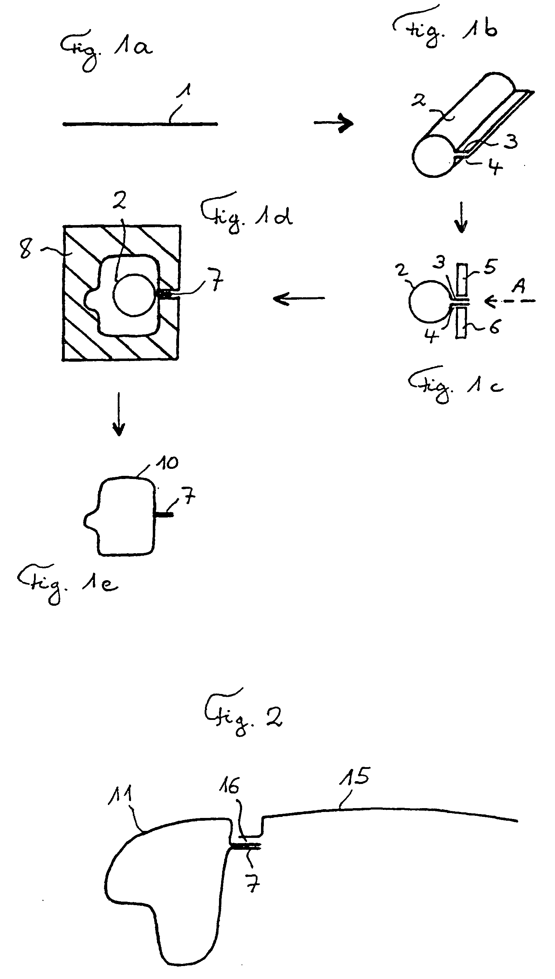

Die Figuren 1 a - 1 e zeigen schematisch eine Abfolge von Verfahrensschritten zur Herstellung eines Formteiles bzw. Formkörpers gemäss der Erfindung. Mit 1 ist in Figur 1 a ein Metallblech bezeichnet, aus welchem der Formkörper gebildet wird. Dies kann ein homogenes Metallblech 1, z.B. ein Stahlblech oder ein Aluminiumblech, aus einem Stück in der notwendigen Grösse und mit gleichmässiger Dicke sein, wie in Figur 1 a dargestellt. Das Blech kann aber auch aus zwei oder mehreren Blechabschnitten durch Schweissung zusammengefügt sein, so dass das Blech 1 Abschnitte verschiedener Dicke und/oder sonstiger Materialeigenschaften aufweist, welche dem späteren Formkörper abschnittsweise verschiedene Eigenschaften verleihen. Solche abschnittsweise zusammengefügte Bleche sind bekannt (sogenannte tailored blanks) und werden z.B. im Automobilbau verwendet und dort auf bekannte Weise zu Bauteilen umgeformt. Das "tailored blank" kann in beliebiger Richtung und mit beliebigen Schweissverfahren zusammengesetzt sein.

Gemäss Figur 1 b wird das Blech zu einem im wesentlichen zylindrischen Rohr 2 geformt, wobei zwei Randbereiche 3 und 4 des Bleches zu vom rohrförmigen Teil 2 abstehenden Zungen geformt werden, welche zusammen einen vom Rohr abstehenden Flansch 7 bilden. Die Verformung des Bleches 1 zum rohrförmigen Teil 2 kann mit Rundapparaten auf herkömmliche Weise erfolgen, wobei ungerundete Randbereiche 3, 4 die Zungen bilden.

Der rohrförmige Körper 2 wird weiter dadurch gebildet, dass die Zungen 3, 4 zum Flansch 7 verschweisst werden (Figur 1 c). Dies kann z.B. durch Ueberlappnahtschweissen mit Schweissrollen 5 und 6 erfolgen, wobei bei jeder Schweissrolle 5, 6 auf bekannte Weise eine Drahtelektrode vorgesehen sein kann. Letzteres hat den Vorteil, dass auch beschichtete Bleche, z.B. verzinnte oder verzinkte Bleche, problemlos geschweisst werden können, da die von einem Drahtvorrat abgewickelte Drahtelektrode ständig erneuert wird. Der Flansch 7 kann aber z.B. auch durch eine stirnseitige Laserschweissung verschweisst werden, was in der Figur 1 c zusätzlich durch den Pfeil A dargestellt ist, welcher symbolisch den auf die Zungen 3, 4 einfallenden Laserstrahl darstellt. Sowohl das Rollnahtschweissen wie das Laserstrahlschweissen erlauben das kontinuierliche Verschweissen langer Flansche 7 mit grosser Geschwindigkeit und hoher Schweissqualität. Laserschweissen ist auch möglich, indem von oben oder unten durch beide Bleche durchgeschweisst wird. Die Ränder können aber auch stirnseitig mit anderen bekannten Schweissverfahren wie MIG, MAG, Plasmaschweissen oder Autogenschweissen verbunden werden. Auche eine Elektronenstrahlschweissung ist möglich. Durch die genannten Verfahren lassen sich praktisch alle Blechsorten mit hoher Qualität verschweissen, insbesondere auch beschichtete Bleche. Der verschweisste Körper 2 weist eine im wesentlichen rohrförmige Form mit offenen Stirnseiten und einem dicht verschweissten Flansch 7 auf.

In einem nächsten Schritt (Figur 1 d) wird der derart gebildete Körper 2 in eine Form 8 zur Innenhochdruckumformung eingebracht. Die Innenfläche dieser Form weist eine Formgebung auf, die der Form des zu erzeugenden Formkörpers entspricht. Ferner sind Mittel zur Abdichtung der offenen Stirnseiten des rohrförmigen Körpers 2 und Mittel zur Einbringung - in der Regel stirnseitig - eines Fluides unter hohem Druck vorhanden. Das Fluid zum Umformen kann auch durch eine Bohrung oder einen Stutzen innerhalb des zylindrischen Teils des Rohlings eingebracht werden. Das Verfahren der Innenhochdruckumformung ist als solches bekannt und die entsprechenden Vorrichtungen zur Durchführung dieser Innenhochdruckumformung sind ebenfalls bekannt und auf dem Markt erhältlich und werden daher hier nicht weiter erläutert. Im vorliegenden Fall wird indes die Form 8 so ausgestaltet, dass der Flansch 7 in der Form von dieser oder mit zusätzlichen Mitteln eingeklemmt werden kann, so dass der Flansch 7 möglichst auf seiner ganzen Länge und vorzugsweise in seiner ganzen Breite während des Innenhochdrukkumformungsvorgangs auf seinen beiden Flächen beaufschlagt wird, derart, dass die Schweissnaht des Flansches von Aufspreizkräften oder Aufschälkräften durch den angewandten Druck im Inneren des Körpers 2 verschont bleibt.

Figur 1 e zeigt den fertigen Formkörper 10, welcher die gewünschte, durch Innenhochdruckumformung erzeugte Formgebung aufweist und mit einem Flansch 7 versehen ist, der zur Befestigung des Körpers 10 an einem weiteren Bauteil dienen kann.

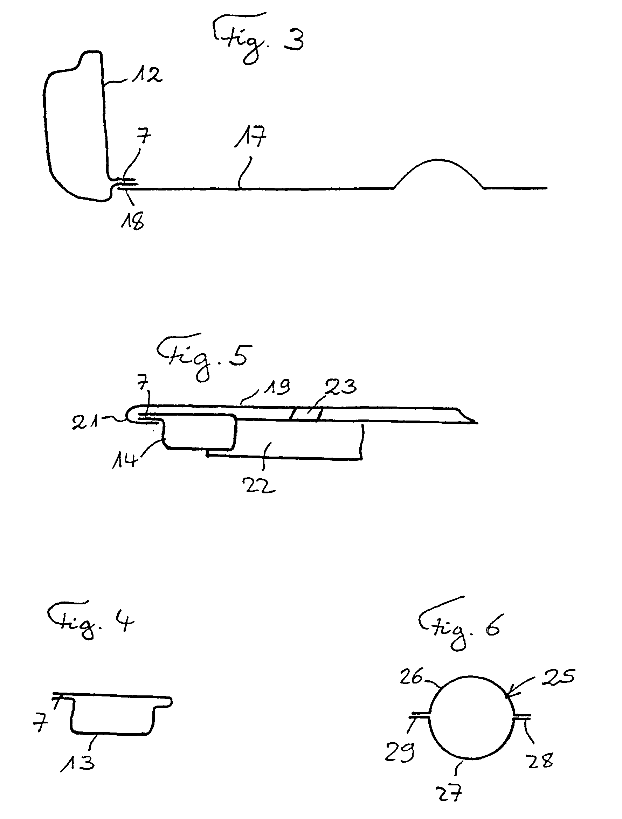

Figur 2 zeigt als Beispiel einen gemäss den vorstehend erläuterten Schritten 1 a bis 1 e hergestellten Formkörper 1, der als Dachkantenprofil bei einem Autodach 15 eingesetzt ist. Die Figur 2 zeigt dabei diesen Einsatz in schematischer, stark vereinfachter Weise. Ersichtlich ist, dass der Formkörper 11 mit seinem Flansch 7 am Dach 15 befestigt ist, z.B. mittels einer Laserschweissung (Naht 16). Natürlich kommen auch andere bekannte Befestigungsarten (Punktschweissen, Kleben) in Frage.

Figur 3 zeigt einen weiteren erfindungsgemäss hergestellten Formkörper 12. Dieser dient - ebenfalls nur vereinfacht dargestellt - als Schwellenprofil bei einem Fahrzeug. Mit 17 ist damit ein Teil des Fahrzeugbodens bezeichnet, an welchem der Formkörper 12 mittels des Flansches 7 befestigt ist, z.B. mittels Punkt- oder Laserschweissung.

Figur 4 zeigt schematisch eine stirnseitige Seitenansicht eines erfindungsgemäss hergestellten Formkörpers 13, der als Türpfosten (B-Säule) eines Automobils verwendet werden kann.

Figur 5 zeigt einen weiteren Formkörper 14, der als Profil im Scharnier- oder Schlossbereich einer Motorhaube oder Kofferraumhaube eines Automobils angeordnet ist. Mittels des Flansches 7 ist der Formkörper 14 am umgebogenen Ende 21 der Aussenhaut 19 der Haube befestigt. Die Innenhaut ist über Kautschukzwischenlagen an der Aussenhaut angeordnet und es sind Verstärkungen 22 vorgesehen.

Figur 6 zeigt einen rohrförmigen Körper 25, der aus zwei halbrund geformten Blechen 26 und 27 zusammengesetzt ist. Aus jeweils zwei abstehenden Randbereichen jedes Bleches entstehen Flansche 28 und 29 die aus jeweils zwei Blechzungen bestehen, die so verschweisst werden, wie dies vorstehend anhand des Flansches 7 von Figur 1 erläutert worden ist. Auch der Körper 25 wird durch Innenhochdruckumformung verformt, wobei beide Flansche 28 und 29 möglichst ganzflächig festgehalten werden. Es entsteht nach der Umformung ein Formkörper 30 mit zwei Flanschen 28 und 29.

Natürlich können durch das erfindungsgemässe Verfahren eine Vielzahl anderer Formteile auch für andere Anwendungsgebiete als den Automobilbau geschaffen werden, so z.B. für den Waggonbau oder den Flugzeugbau.

## Patentansprüche

1. Verfahren zur Herstellung eines durch Innenhochdruckumformung verformten Formteiles (10 - 14) aus Metallblech, wobei durch Runden eines Bleches (1) ein im wesentlichen rohrförmiger Körper (2) gebildet wird, der einen von dem Körper nach aussen weisenden Flansch (7) aus ungerundeten Randbereichen (3, 4) des Bleches aufweist, oder dass durch halbrunden zweier Bleche (26, 27) ein im wesentlichen rohrförmiger Körper (25) gebildet wird, der an seinen Längsseiten zwei separate, einander gegenüberliegende Flansche (28, 29) aus ungerundeten Randbereichen der Bleche aufweist, wobei der Flansch (7) oder die Flansche (28, 29) verschweisst werden, und wobei der Körper durch Innenhochdruckverformung zum Formteil (10 - 14) umgeformt wird.

2. Verfahren nach Anspruch 1, **dadurch gekennzeichnet, dass** der Flansch (7; 28, 29) durch Rollnahtschweissen mit oder ohne Drahtelektrode verschweisst wird.

3. Verfahren nach Anspruch 1 oder 2, **dadurch gekennzeichnet, dass** der Flansch durch Laserschweissung oder Elektronenstrahlschweissung verschweisst wird.

4. Verfahren nach Anspruch 1, **dadurch gekennzeichnet, dass** der Flansch durch Gasschmelzschweissen oder elektrisches Lichtbogenschweissen verschweisst wird.

5. Verfahren nach einem der Ansprüche 1 bis 4, **dadurch gekennzeichnet, dass** der Flansch bei der Innenhochdruckverformung festgehalten wird, insbesondere durch die Form (8) für die Innenhochdruckverformung.

6. Verfahren nach einem der Ansprüche 1 bis 5, **dadurch gekennzeichnet, dass** jedes Blech (1) vor dem Runden aus mindestens zwei Blechen durch Schweissung zusammengesetzt wird.

## Claims

1. Method for the production of a formed sheet-metal component (10 - 14) which is formed by intemal high-pressure forming, wherein an essentially tubular body (2) is formed by rounding a sheet-mental blank (1) and has a flange (7) formed from unrounded margins (3, 4) of the blank pointing outwards from the body, or that [*sic*] an essentially tubular body (25) is formed by half-rounding two sheet-metal blanks (26, 27) and has two separate and opposite flanges (28, 29) on its longitudinal sides, formed from unrounded margins of the blanks; wherein the flange (7) [is,] or flanges (28, 29) are, welded; and wherein the body is formed into the formed component (10 - 14) by internal high-pressure forming.

2. Method according to Claim 1, **characterized in that** the flange (7; 28, 29) is welded by roller seam welding with or without wire electrode.

3. Method according to Claim 1 or Claim 2, **characterized in that** the flange is welded by laser welding or electron beam welding.

4. Method according to Claim 1, **characterized in that** the flange is welded by gas fusion welding or electric arc welding.

5. Method according to any one of Claims 1 to 4, **characterized in that** the flange is clamped during the internal high-pressure forming, in particular by the mould (8) for the internal high-pressure forming.

6. Method according to any one of Claims 1 to 5, **characterized in that** each blank (1) is composed of at least two sheet-metal blanks which are assembled together by welding before rounding takes place.

## Revendications

1. Procédé de fabrication d'une pièce moulée (10-14) en tôle métallique formée par moulage sous haute pression interne, dans lequel en soumettant une tôle (1) à des ronds on forme un corps (2) sensiblement tubulaire , qui comporte une bride (7) orientée vers l'extérieur du corps et constituée de zones de bord (3,4) non arrondies de la tôle, ou dans lequel un corps sensiblement tubulaire (25) est formé en soumettant deux tôles (26, 27) à des demi- ronds, ledit corps comprenant sur ses côtés longitudinaux deux brides (28, 29) séparées et situées à l'opposé l'une de l'autre, constituées de zones de bord non arrondies des tôles, dans lequel la bride (7) ou les brides (28, 29) sont soudées et le corps est formé par moulage de la pièce moulée (10-14). sous haute pression interne.

2. Procédé selon la revendication 1, **caractérisé en ce que** la bride (7 ; 28, 29) est soudée par soudage au galet avec ou sans fil- électrode.

3. Procédé selon la revendication 1 ou 2, **caractérisé en ce que** la bride est soudée par soudage au laser ou par soudage par rayonnement électronique.

4. Procédé selon la revendication In, **caractérisé en ce que** la bride est soudée au chalumeau ou à l'arc électrique.

5. Procédé selon l'une des revendications 1 à 4, **caractérisé en ce que** la bride est maintenue pendant le formage sous haute pression interne, notamment par le moule (8) de formage sous haute pression interne.

6. Procédé selon l'une des revendications 1 à 5, **caractérisé en ce que** avant le traitement par des ronds chaque tôle (1) est assemblée par soudage d'au moins deux tôles.
